(19) Europäisches Patentamt
European Patent Office
Office européen des brevets

(11) **EP 3 211 452 B1**

(12) **FASCICULE DE BREVET EUROPEEN**

(45) Date de publication et mention
de la délivrance du brevet:
**07.11.2018 Bulletin 2018/45**

(51) Int Cl.:
***G01S 13/88*** *(2006.01)*   ***G01S 7/03*** *(2006.01)*
***G01S 13/90*** *(2006.01)*

(21) Numéro de dépôt: **17157293.6**

(22) Date de dépôt: **22.02.2017**

(54) **DISPOSITIF DE DETECTION D'OBJETS PORTES PAR UN INDIVIDU**

OBJEKTERFASSUNGSVORRICHTUNG, DAS VON EINER PERSON GETRAGEN WIRD

DEVICE FOR DETECTING OBJECTS CARRIED BY AN INDIVIDUAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.02.2016 FR 1651492**

(43) Date de publication de la demande:
**30.08.2017 Bulletin 2017/35**

(73) Titulaires:
• **Chekroun, Claude
91190 Gif Sur Yvette (FR)**
• **Chekroun, Gilles
91190 Gif Sur Yvette (FR)**

(72) Inventeurs:
• **Chekroun, Claude
91190 Gif Sur Yvette (FR)**
• **Chekroun, Gilles
91190 Gif Sur Yvette (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
**WO-A2-2015/059132      FR-A1- 2 855 642
FR-A1- 3 003 959**

**Description**

La présente invention concerne un dispositif de détection d'objets portés par un individu, immobile ou en mouvement, ces objets pouvant être des objets illicites cachés sous des vêtements.

La surveillance des personnes dans les lieux publics est devenue une nécessité de sécurité publique. Il existe un besoin croissant de contrôler ce que transportent les individus. Dans la rue, il y a une réelle nécessité de détecter des explosifs, des armes ou encore des drogues. Dans les trains, il faut notamment détecter des explosifs ou des armes. Dans les stades, en plus de ces objets dangereux, il est utile de détecter des bouteilles de verres ou des drogues notamment. Les solutions de contrôle actuelles sont insuffisantes. Les forces de sécurité disposent :

- De détecteurs de métaux, qui ne peuvent bien sûr pas détecter les objets non métalliques tels que les explosifs ;
- De dispositifs à rayons X, utilisables pour des bagages par exemple, mais pas en zone ouverte pour des raisons de santé publique ;
- D'autorisations de fouilles, mais celles-ci sont lentes et peuvent être contestées.

Les documents FR 3 003 959 A1 et FR 2 844 642 A1 divulguent un système radar équipé d'une antenne rotative à fente hélicoïdale afin de faire de l'imagerie radar pour détecter des objets dangereux portés par un individu. Le document WO 2015/059132 A2 divulgue un radar à ouverture synthétique combiné à une caméra stéréoscopique pour la détection d'objets dangereux portés par un individu. Un but de l'invention est de surmonter ces inconvénients et de permettre la détection d'objets illicites portés par des individus, en mouvement ou immobiles, de façon simple et rapide.

A cet effet, l'invention a pour objet un dispositif de détection d'objets portés par des individus, immobiles ou en mouvement, ledit dispositif comportant au moins :

- au moins une antenne rotative comportant au moins deux guides d'onde rectilignes parallèles et un cylindre pourvu d'une fente hélicoïdale mobile en rotation autour desdits guides, lesquels sont ouverts en regard de la face intérieure dudit cylindre mobile, ladite surface formant un court-circuit hyperfréquence pour fermer lesdits guides, un desdits guides étant dédié à l'émission, une source rayonnante mobile étant en regard desdits guides par suite du mouvement de rotation dudit cylindre induisant un faisceau d'émission et de réception mobile apte à être orienté vers un individu ;
- un radar émettant un signal hyperfréquence selon une onde continue (CW) vers le guide d'émission de ladite antenne et recevant les signaux reçus des guides de ladite antenne captés par ledit faisceau mobile, lesdits signaux reçus étant la composante directe I et la composante en quadrature ;
- une caméra stéréoscopique orientée dans la même direction que ledit faisceau mobile, apte à enregistrer l'enveloppe vestimentaire dudit individu, ladite enveloppe servant de surface de référence pour la mesure des distances audit dispositif ;
- un calculateur calculant une image de type SAR de la partie du corps dudit individu ciblée par ledit radar et ladite caméra équipé d'éventuels objets, à partir des signaux reçus dudit radar et des distances mesurées par ladite caméra.

Dans un mode de réalisation particulier les deux guides sont gravés dans un cylindre disposé à l'intérieur du cylindre mobile, les deux cylindres ayant le même axe, et l'espace entre les deux cylindres est égal à 0,1 mm ± 0,05 mm.

Ladite antenne rotative comporte par exemple un système de minimisation des fuites hyperfréquence, ledit système étant composé de trois cavités, lesdites cavités étant disposées deux à deux de chaque côté desdits guides d'onde, parallèlement à ceux-ci, sur toute leur longueur.

Lesdits guides d'onde étant gravés dans un cylindre disposé à l'intérieur du cylindre mobile, ledit cylindre mobile et ledit cylindre intérieur sont par exemple mobiles en rotation par l'intermédiaire d'un dispositif à roulement à billes, la base dudit cylindre mobile et la base dudit cylindre intérieur étant respectivement solidaire mécaniquement de la partie mobile et de la partie fixe dudit dispositif.

Ledit radar fonctionne par exemple dans une bande de fréquence millimétrique.

Dans un mode de réalisation possible, ledit dispositif comporte deux antennes rotatives pour que ledit radar fonctionne en mode bi-statique, une antenne réalisant l'émission et l'autre antenne étant dédiée à la réception.

Dans ce mode de réalisation possible, les antennes sont par exemple reliées entre elles par deux guides d'onde, un guide reliant les guides d'émission desdites antennes et l'autre guide reliant les guides de réception, le premier guide d'onde étant relié via un T magique à un guide d'onde relié au radar et le deuxième guide d'onde étant relié via un autre T magique à un guide d'onde relié au radar.

Ledit radar émet par exemple selon un nombre N de fréquences proches d'une fréquence donnée, l'impulsion d'émission étant découpée en N parties, chaque partie correspondant à une fréquence, un premier niveau d'analyse de l'image étant réalisé pour les signaux reçus à la première desdites fréquences, d'autres analyses étant réalisées pour les signaux reçus aux autres fréquences, les différentes analyses permettant d'approcher la valeur théorique de la permittivité diélectrique d'un objet détecté.

Le calculateur est par exemple partie intégrante des moyens de traitement dudit radar.

Ledit dispositif comportant des moyens de visualisation des images obtenues, lesdits moyens de visualisation sont par exemple des lunettes portées par un utilisateur et sur lesquelles sont projetées lesdites images.

La partie antennaire, le radar et leurs moyens d'interconnexion sont disposés à l'intérieur d'une structure cylindrique portable, faisant également fonction de radôme, ladite structure supportant ladite caméra.

D'autres caractéristiques et avantages de l'invention apparaîtront à l'aide de la description qui suit, faite en regard de dessins annexés qui représentent :

- La figure 1, les principaux composants formant un dispositif selon l'invention ;
- Les figures 2a et 2b, le principe de réalisation de l'antenne rotative utilisée dans le dispositif selon l'invention ;
- La figure 3, une vue transversale de ladite antenne ;
- Les figures 4a à 4e, une illustration du fonctionnement de ladite antenne ;
- Les figures 5a et 5b, un exemple de réalisation de ladite antenne ;
- Les figures 6a et 6b, un exemple de réalisation permettant de minimiser les fuites hyperfréquence au niveau de ladite antenne ;
- La figure 7, une vue en coupe longitudinale de ladite antenne ;
- Les figures 8a et 8b, un exemple de réalisation d'un dispositif selon l'invention permettant un fonctionnement de type bi-statique ;
- La figure 9, une illustration du fonctionnement mono-statique et une illustration du fonctionnement bi-statique ;
- La figure 10, une illustration de la détection d'un objet à travers un vêtement ;
- La figure 11, une zone détection soumise à l'analyse d'un signal multifréquences ;
- La figure 12, un exemple de réalisation d'un dispositif selon l'invention, portable ;
- La figure 13, un exemple d'application de dispositifs selon l'invention équipant des portes pour le contrôle d'un passage.

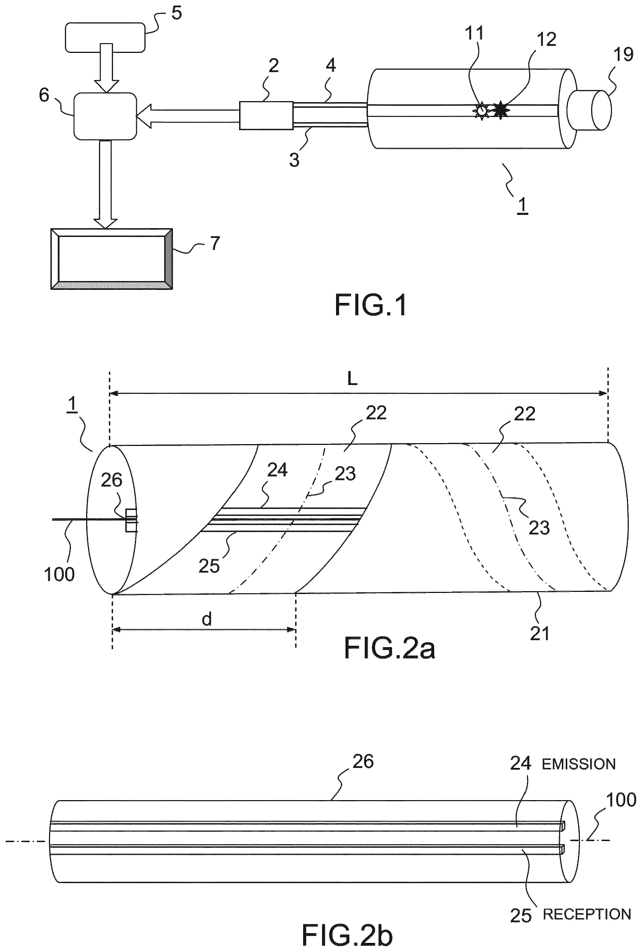

La figure 1 illustre les principaux composants formant un dispositif selon l'invention. Il comporte au moins :

- une antenne rotative 1 dont le fonctionnement sera décrit par la suite et que l'on pourra appeler également scanner ;
- un radar 2, à onde continue (CW) fonctionnant par exemple à une fréquence centrale proche de 77 GHz, à faible coût fonctionnant en mode de réception homodyne, et comportant notamment la génération des ondes d'émission à la fréquence centrale, les moyens de réception et les moyens d'émission, le radar 2 fournissant une image radar à partir des signaux reçus par l'antenne rotative selon le principe de l'imagerie SAR comme cela sera décrit par la suite ;
- deux guides d'onde 3, 4 assurant pour l'un la transmission des signaux hyperfréquences du radar 2 vers l'antenne 1 et pour l'autre de l'antenne vers le radar ;
- une caméra stéréoscopique 5, par exemple de type Kinect ;
- un calculateur 6 combinant l'image obtenue par la caméra avec l'image obtenue par le radar afin de visualiser les éventuels objets détectés en superposition de l'image stéréoscopique obtenue par la caméra ;
- un écran 7 ou tout autre moyen de visualisation, reliée au calculateur, affichant l'image finale.

On va décrire par la suite les différents composants du dispositif selon l'invention.

Les figures 2a et 2b illustrent le principe de réalisation possible du scanner 1. La figure 2 illustre le principe de réalisation. L'antenne 1 comporte un cylindre métallique 21 présentant une ouverture rayonnante 22 suivant une ligne hélicoïdale 23 parcourant le tour du cylindre. L'antenne comporte au moins une paire de guides d'onde 24, 25 disposés à l'intérieur du cylindre et ouverts vers la paroi intérieure du cylindre. Un guide d'onde 24 est réservé à l'émission et l'autre guide d'onde 25 est réservé à la réception. Le guide d'émission 24 est relié aux moyens d'émission du radar 2 et le guide de réception 25 est relié aux moyens de réception du radar 2. Le cylindre 21 et les guides d'ondes 24, 25 ont un mouvement de rotation relatif par rapport à l'axe 100 du cylindre.

De préférence, les guides restent fixes et le cylindre 21 est animé d'un mouvement de rotation autour des guides. Les guides 24, 25 sont placés sur un support 26 disposé à l'intérieur du cylindre 21.

La figure 2b illustre un exemple de réalisation du support 26 des guides d'onde 24, 25. Ce support 26, disposé à l'intérieur du premier cylindre 21, est un cylindre. Il forme le stator dans le cas où le premier cylindre 21, le rotor, est animé d'un mouvement de rotation. Les guides d'onde 24, 25 sont disposés sur le cylindre intérieur 26. Dans un mode de réalisation préféré, les guides 24, 25 sont gravés dans ce cylindre 26. En effet, compte-tenu de la vitesse de déplacement des personnes à surveiller, allant de 0,5 à 3 km/h, pour obtenir un bon échantillonnage de l'antenne synthétique, à 0,5 $\lambda$ ($\lambda$ étant la longueur de l'onde hyperfréquence utilisé), la vitesse de rotation du rotor doit être comprise entre 1500 et 3000 tours par minute, ce qui exclut toute asymétrie du stator. Cela impose un stator avec une enveloppe extérieure cylindrique, et donc des guides d'onde gravés dans le cylindre.

L'antenne 1 comporte deux guides 24, 25, l'un en émission et l'autre en réception, ces deux guides distincts permettant avantageusement une auto calibration en temps réel. En effet, tout système mécanique fonctionnant aux vitesses de rotation telles que celle annoncée précédemment nécessite un système de calibration quasiment en temps réel. Cette calibration nécessite la mesure des différents trajets hyperfréquence à l'intérieur du dispositif qui peut être avantageusement réalisée par le couplage externe entre l'émission produite par le guide d'émission 24 et la réception sur l'autre guide 25, permettant ainsi des actions préventives contre des dérèglements.

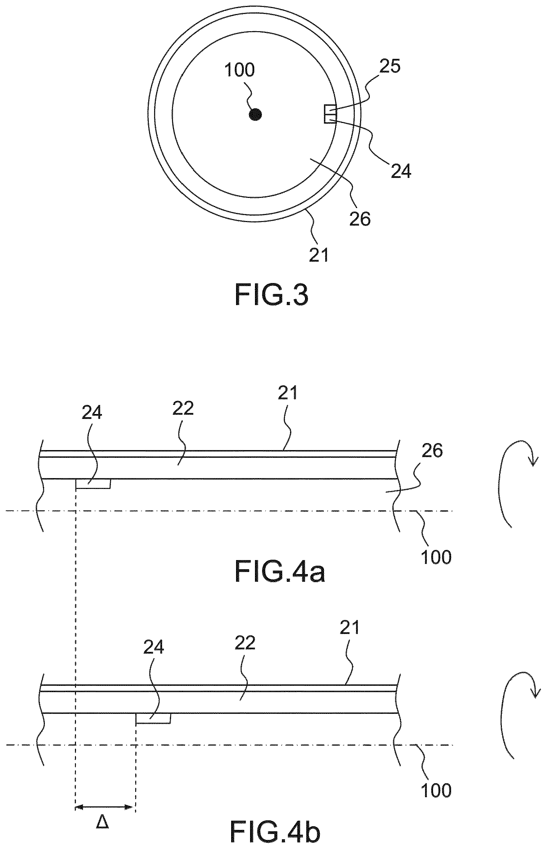

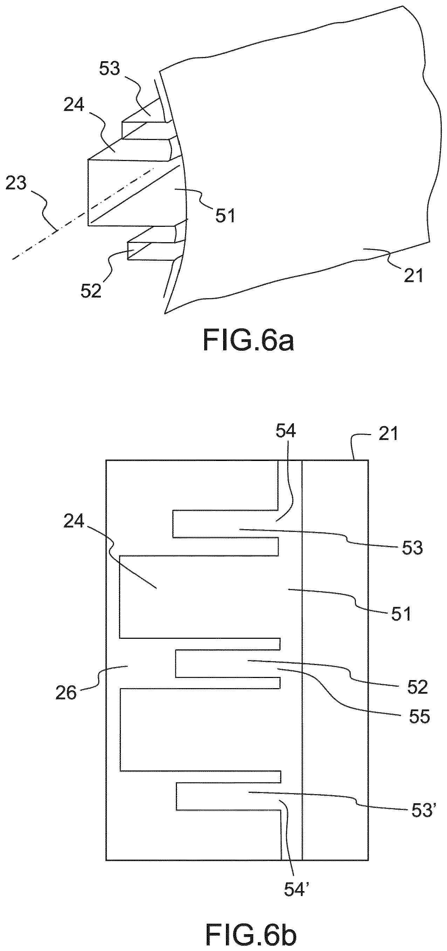

La figure 3 présente par une vue transversale la disposition du cylindre intérieur 26 par rapport au cylindre extérieur 21, les deux cylindres ayant le même axe de symétrie 100. Le diamètre du cylindre intérieur 26 est par exemple défini de façon à ce que la face rayonnante des guides soit à une distance donnée du cylindre extérieur que l'on précisera par la suite. Lorsque la face rayonnante est en regard de la partie métallisée intérieure du cylindre, et non de l'ouverture, cette face métallisée joue le rôle d'un court circuit hyperfréquence, sans pour autant éviter les fuites au niveau des contacts. Pour éviter ces fuites importantes, on dispose le long des guides d'onde d'émission et de réception 24, 25 trois fentes gravées dans le cylindre intérieur jouant le rôle de courts circuits permettant de ramener des courts circuits au niveau des guides. Un exemple de réalisation de ces fentes sera présenté aux figures 6a et 6b.

Le principe de réalisation de l'antenne rotative illustré par les figures 2a, 2b et 3 utilise une paire de guides d'onde 24, 25, l'un pour l'émission et l'autre pour la réception. Il est possible de prévoir un mode de réalisation comportant deux paires de guides d'ondes (émission et réception). Dans ce cas, la deuxième paire est par exemple diamétralement opposée à la première paire 24, 25. Les deux paires de guides sont alors par exemple reliées au radar 2 via un commutateur SP4T. Avantageusement, une telle antenne permet d'augmenter le domaine de contrôle.

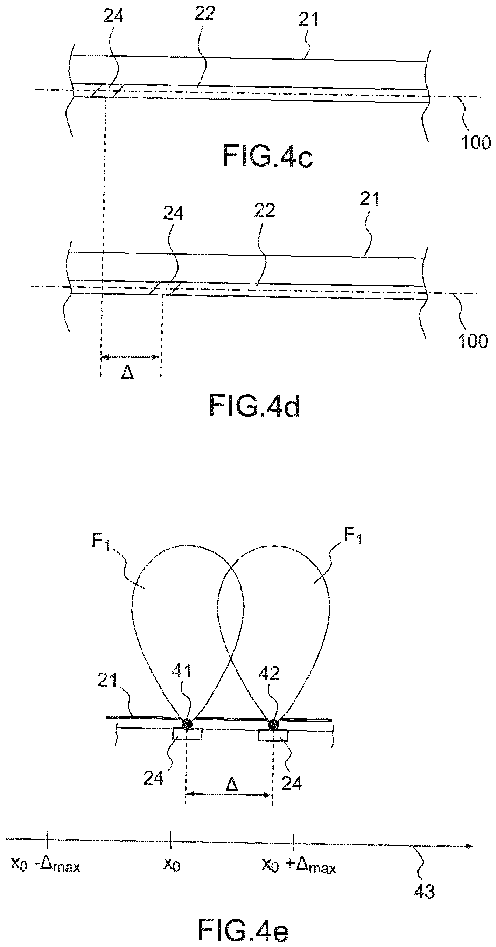

Les figures 4a, 4b, 4c, 4d et 4e illustrent le fonctionnement d'une antenne telle que décrite précédemment, plus particulièrement le mode détection qu'elle permet. Les figures 4a et 4b représentent une vue en coupe partielle, selon l'axe 100, de deux positions relatives des cylindres 21, 26. Les figures 4c et 4d illustrent respectivement les positions relatives des deux cylindres des vues partielles des figures 4a et 4b par des vues de dessus. Ces figures montrent qu'en présence du cylindre extérieur 26, les fentes 24, 25 forment deux guides d'onde hyperfréquence sans contact, la rotation du cylindre intérieur 26 en regard du cylindre extérieur fixe et ouvert longitudinalement formant deux sources rayonnantes mobiles.

Pour faciliter l'explication de ce phénomène, on considère un seul faisceau, correspondant par exemple au guide d'onde en émission 24. En fonctionnement, les parties du guide 24 qui font face à la paroi métallisée du cylindre 21 ne rayonnent pas. Les parties du guide qui sont en regard de l'ouverture 22 participent au rayonnement de l'antenne, en émission et en réception. En fait, en raison de la forme hélicoïdale du guide d'onde 25 suivant une hélice et de sa rotation par rapport l'ouverture 22 longitudinale du cylindre fixe, le guide 24 se présente en regard de l'ouverture comme un élément de guide glissant effectuant des allers et retours rectilignes.

La figure 4a illustre la position d'une partie du guide 24 au regard de l'ouverture rayonnante à un instant donné $t_0$. La figure 4e illustre le faisceau d'antenne $F_1$ associé à la position de la figure 4a avec son centre de phase 41 situé au niveau de la partie guide 24 formant illuminateur ou source rayonnante. Le faisceau $F_1$ représente ici la couverture angulaire de l'antenne. La figure 4b illustre les mêmes éléments que ceux de la figure 4a, mais à un instant suivant $t_0$ + $\Delta t$. Dans le plan de la figure, la partie du guide 24 formant source rayonnante, en regard de l'ouverture 22, s'est alors décalée d'une distance $\Delta$ par suite de la rotation du cylindre intérieur 26. Le faisceau d'antenne $F_1$ correspondant à la position de cylindre intérieur 26 de

la figure 4b est représenté avec son centre de phase 42 qui s'est décalé d'une distance $\Delta$. La rotation du cylindre intérieur supportant le guide 24 permet donc le déplacement continu du centre de phase du rayonnement et donc du faisceau $F_1$. Le long de l'axe 43 de l'ouverture longitudinale 22, parallèle à l'axe 100 du cylindre, le centre de phase se déplace entre une position $x_0$ - $\Delta_{Max}/2$ et $x_0$ + $\Delta_{Max}/2$. L'amplitude du déplacement $\Delta_{Max}$ dépend du pas de l'hélice 23 que suit l'ouverture rayonnante. La vitesse de rotation du cylindre intérieur 26 est telle que le centre de phase 41, 42 se déplace linéairement à une vitesse qui peut atteindre 30 m/s.

La largeur du faisceau $F_1$ est fonction de la largeur d de l'ouverture 22 du cylindre extérieur, formant ouverture rayonnante. Plus d est petite, plus le faisceau d'antenne est large. La largeur à 3dB du faisceau $F_1$ est $\lambda$/d, où $\lambda$ est la longueur d'onde émise. Le principe de balayage est le même en réception avec le guide de réception 25.

La rotation du cylindre intérieur permet donc le déplacement continu du centre de phase du rayonnement, et permet ainsi d'obtenir un fonctionnement du type radar à antenne synthétique ou SAR. Cette propriété est par les moyens de traitement du radar 2 pour obtenir et analyser des images radar à haute résolution. Pour mémoire, les radars à antenne synthétique sont des radars dont l'antenne est orientée perpendiculairement à la route du porteur. C'est le porteur du radar, et plus particulièrement de l'antenne, qui dans son déplacement engendre l'observation de l'espace. Dans le cas présent, le déplacement du porteur est simulé par le déplacement du centre de phase. Les deux dimensions de l'image radar sont définies par la direction de propagation et le déplacement du porteur. La résolution spatiale, qui conditionne la finesse de l'image observée, est donc obtenue :

- dans la direction perpendiculaire au mouvement du porteur par la résolution en distance du radar ;
- dans la direction du mouvement du porteur par la largeur du faisceau F1.

Le traitement du type SAR est notamment décrit dans l'ouvrage de J.Darricau : Physique et Théorie du Radar -Tome 3, 3ème édition - Chapitre 21, page 483 - Editeur Sodipe, Paris 1994.

Un ensemble de récepteurs disposés le long de l'axe 43 est alors reconstitué dans le temps comme dans une application de type SAR, permettant ainsi de réaliser des images radar. En effet, à partir des coefficients de réflexion mesurés pour chaque pixel de l'image on reconstitue la forme des objets.

Dans le mode de réalisation décrit par les figures 2a et 2b, le cylindre intérieur 26 comportant les deux guides d'onde 24, 25 est fixe, les deux guides étant rectilignes. Le rotor 21 comporte la fente hélicoïdale 22 qui tourne autour des guides.

Il est possible de prévoir un mode de réalisation où le cylindre intérieur 26 équipé des guides d'onde tourne, formant rotor, alors que la fente hélicoïdale 22 reste fixe.

Dans un autre mode de réalisation les guides d'onde ont une forme hélicoïdale et la fente en rotation autour des guides est rectiligne. Ce mouvement de rotation est relatif, c'est-à-dire que soit les fentes peuvent être fixes et la fente mobile en rotation, ou à l'inverse les guides sont mobiles en rotation et la fente est fixe.

Lorsque le cylindre creux portant la fente est fixe, celui-ci peut faire office de radôme, évitant également que la fente se déforme sous l'effet de la rotation. Des guides d'onde en rotation nécessitent cependant un système de joint tournant et un mécanisme adapté pour échanger les signaux avec le radar. Pour tous ces modes de réalisation, le principe de fonctionnement reste celui décrit aux figures 4a à 4e. Par la suite, on considère un mode de réalisation selon les figures 2a et 2b où les guides restent fixes.

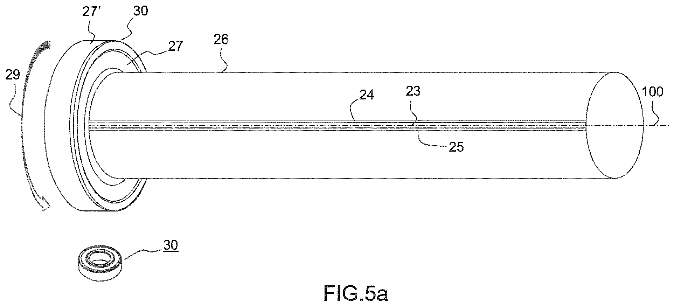

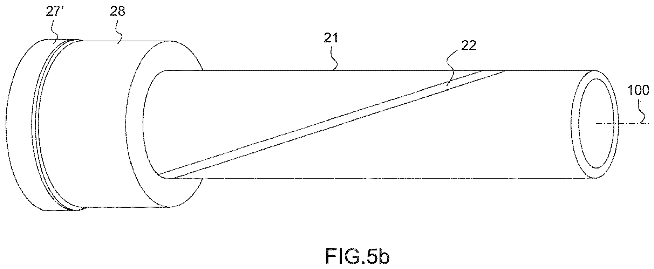

Les figures 5a et 5b présente un exemple de réalisation conforme à ce mode de réalisation, la figure 5a représentant le cylindre intérieur fixe 26, stator, équipé des deux guides d'onde 24, 25 et la figure 5b représentant le cylindre extérieur 21, équipé de la fente hélicoïdale, en rotation autour du cylindre fixe.

Le cylindre extérieur 21 est entraîné en rotation par un moteur 19, représenté en figure 1. Il glisse en rotation par rapport à la partie fixe via un dispositif à roulement à billes cylindrique 30. La partie fixe 27 du roulement à billes est solidaire mécaniquement de la base du cylindre intérieur 26 et la partie mobile 27' du roulement à billes est solidaire mécaniquement d'un support 28, par exemple de forme cylindrique, ce support étant lui-même solidaire mécaniquement du cylindre extérieur 21. Le support cylindrique 28 forme par exemple une embase cylindrique élargie du cylindre fixe 21, l'ensemble formant le stator.

L'ensemble stator et rotor est recouvert d'un radôme de protection non représenté.

Les figures 6a et 6b illustrent un mode particulier de réalisation des guides et leur couplage au cylindre extérieur 21 permettant avantageusement la minimisation des fuites hyperfréquence comme cela a été évoqué précédemment. La figure 6b est une vue en coupe partielle où le rayon de courbure n'a pas été représenté pour des raisons de simplification.

La figures 6a présente, par une vue partielle en perspective, la réalisation d'un guide, à titre d'exemple on considère le guide d'émission 24. Le guide de réception 25 est réalisé et couplé de la même façon.

Le guide d'onde 24 est un guide à section rectangulaire comportant une ouverture rayonnante 51. La face intérieure métallisée du cylindre extérieur 21 forme un court-circuit pour fermer le guide. La rotation du guide 24 à l'intérieur de ce cylindre 21 a pour effet de créer une source rayonnante qui se déplace le long de son ouverture longitudinale 22. Le guide d'onde 24 est relié par une extrémité aux circuits d'émission du radar 2 et autres circuits par des moyens de transmission qui seront décrits par la suite. Il est relié à son autre extrémité à une charge adaptée.

Deux cavités 52, 53 parallèles sont réalisées de chaque côté du guide 24, sur toute sa longueur. Ces cavités étant parallèles au guide d'onde 24, elles suivent également la ligne hélicoïdale 23.

La figure 6b présente les deux guides d'onde 24, 25 entourés chacun d'une cavité. Le guide d'onde d'émission 24 est entouré à gauche d'une cavité 53 et à droite d'une cavité 52. Le guide d'onde de réception 25 est entouré à gauche de cette dernière cavité 52, commune aux deux guides, et à droite par une cavité 53'.

Les ouvertures 54, 55, 54' des cavités sont sensiblement dans le plan de l'ouverture 51 du guide, plus précisément dans une même ligne de courbure.

Avantageusement, ces cavités piègent les ondes hyperfréquence et limitent très fortement, voire suppriment les fuites hyperfréquences.

Ces cavités 52, 53, 53' sont moins larges et moins profondes que le guide. Les dimensions sont par exemple les suivantes, $\lambda$ étant la longueur d'onde émise, correspondant à la fréquence centrale :

- Profondeur d'un guide 24, 25 : 0,75 $\lambda$ ;
- Largeur d'un guide 24, 25 : 0,35 $\lambda$ ;
- Profondeur d'une cavité latérale 52, 53, 53' : 0,25 $\lambda$ ;
- Largeur d'une cavité latérale 52, 53, 53' : 0,12 $\lambda$ ;

La distance entre l'ouverture 51 du guide et les ouvertures 54, 55, 54' des cavités d'une part et la face intérieure du cylindre 21 peut aller de 0,1 λ à 2 λ. Dans le cas d'application avec le radar 2 fonctionnant à 77 GHz, λ est de l'ordre de quelques millimètres.

Dans l'exemple des figures 6a et 6b, le guide émet selon la composante E, l'ouverture rayonnante étant réalisée sur un petit côté du guide.

La figure 6b présente un mode de réalisation préférentiel où le guide 24 et les cavités 52, 53, 53' sont réalisés dans le cylindre intérieur 26. A cet effet, ce cylindre peut être métallique. Comme pour les guides d'onde 24, 25, les cavités 52, 53, 53' peuvent être gravées dans le cylindre.

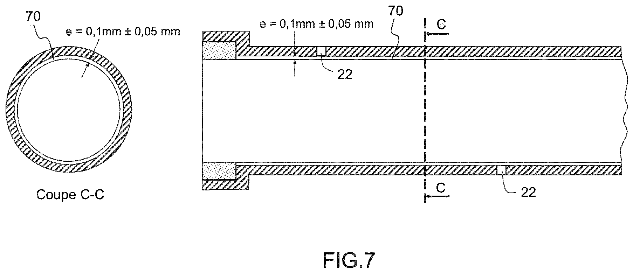

La figure 7 précise, par une vue en coupe longitudinale partielle, un mode de réalisation avantageux où l'espace 70 entre le stator 26 et le rotor 21 est très faible, ayant typiquement une épaisseur e typiquement égale à 0,1 mm avec une tolérance de ± 0,05 mm.

La hauteur du scanner 1 est par exemple de l'ordre de 400 mm.

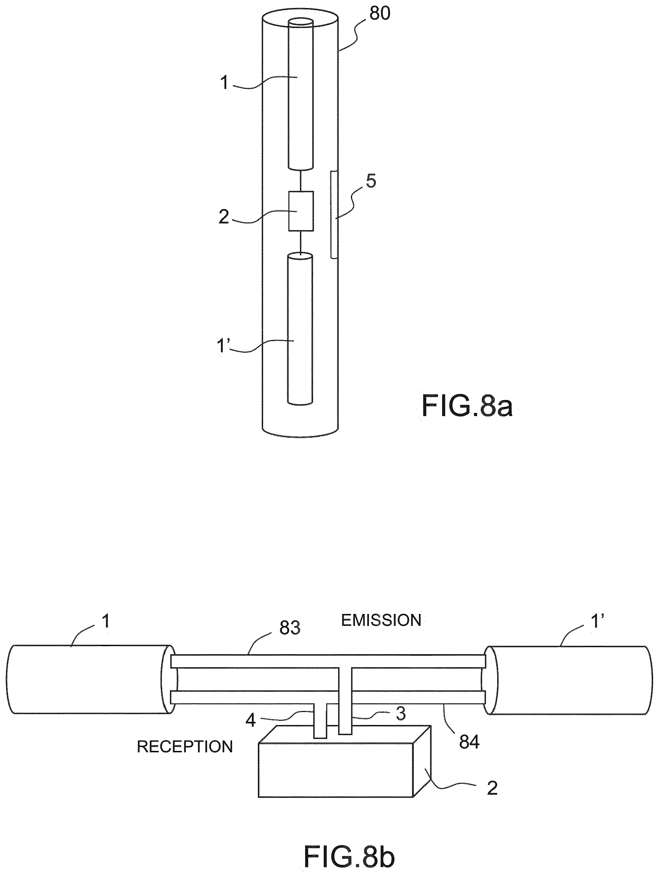

Les figures 8a et 8b présentent un mode de réalisation du dispositif selon l'invention permettant de faire à la fois un mode de fonctionnement radar classique, de type mono-statique, et un mode de fonctionnement bi-statique.

A cet effet, le dispositif comporte deux scanners 1, 1' du type de celui illustré par les figures 5a et 5b, les deux scanners étant reliés au radar 2 conformément à la figure 8b. Les deux scanners 1, 1' sont reliés entre eux par deux guides d'onde 83, 84, un guide 83 reliant les guides d'émission 24 des scanners et l'autre guide 84 reliant les guides de réception 25 des scanners.

Le premier guide d'onde 83 est relié via un T magique à la voie d'émission 3 reliée au radar. Le deuxième guide d'onde 84 est relié via un autre T magique à la voie de réception 4 reliée au radar.

L'ensemble des deux scanners et du radar est disposé à l'intérieur d'un radôme 80, de forme cylindrique. La caméra 5 est fixée sur ce radôme entre les deux scanners 1, 1'.

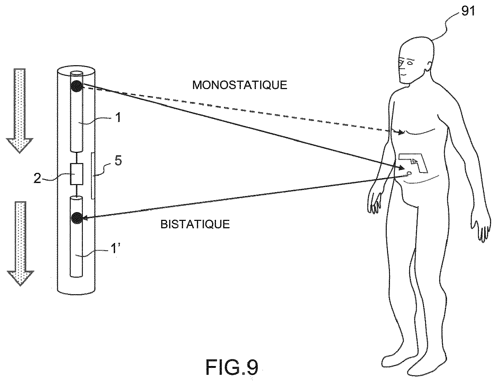

La figure 9 illustre les deux modes de fonctionnement du dispositif illustré par les figures 8a et 8b. Dans le mode mono-statique, un seul scanner 1 est utilisé, pour l'émission vers un individu 91 et pour la réception. Dans le mode bi-statique, le premier scanner 1 effectue l'émission vers l'individu et le deuxième scanner 1' réalise la réception des signaux réémis par l'individu.

Le mode de fonctionnement bi-statique permet avantageusement d'améliorer la qualité de l'image radar. La caméra 5 est orientée vers l'individu afin de capter les images vidéo de celui-ci.

On revient à la figure 1, pour décrire la formation des images radar en combinaison avec la caméra stéréoscopique 5. Le radar peut fonctionner en mode mono-statique ou en mode bi-statique.

Le dispositif selon l'invention permet de détecter et d'imager des objets magnétiques ou non magnétiques cachés sous les vêtements d'une personne fixe ou en mouvement.

Avantageusement, la caméra mesure les distances sur les vêtements et, l'émission infrarouge ne pénétrant pas les vêtements, permet la formation d'un filtre adapté afin d'obtenir une imagerie radar des objets et la détermination de leurs natures, à travers les vêtements.

Il est à noter qu'en l'absence de cette caméra, le radar ne permettrait pas la mesure des différentes distances des parties du corps des personnes en mouvement, car il serait nécessaire d'opérer en mode FMCW (onde continue modulée en fréquence) de 70 GHz à 110 GHz pour atteindre les précisions recherchées qui sont de l'ordre du millimètre.

Les deux guides d'onde 3, 4 relient l'antenne 1 au radar 2. Un premier guide 3 transmet l'onde d'émission vers l'antenne. Ce premier guide d'onde 3 transmet également les signaux de réception de l'antenne vers le radar. Le deuxième guide 4 transmet l'onde de réception de l'antenne vers le radar, via un déphaseur effectuant une rotation de phase de 90° sur les signaux reçus.

Ainsi par la voie directe, utilisant le premier guide 3, on transmet les signaux sans déphasage fournissant la composante directe $I(t)$ des signaux reçus alors que le deuxième guide 4 fournit la composante en quadrature $Q(t)$.

Les composantes ainsi reçues sont prises en compte par les moyens de réception et de traitement du radar 2 pour le calcul de l'image radar obtenue, cette image étant de type SAR comme indiqué précédemment.

La formation de l'image Im($x_i, y_j$) en un point ($x_i, y_j$) s'effectue de façon connue par l'intégration des signaux reçus dans un temps d'analyse $T$. L'image Im($x_i, y_j$) est alors donnée par la relation suivante :

$$\mathrm{Im}(x_i, y_j) = \int_0^T (I(t) + iQ(t)) . \exp\left[ -\mathrm{i}\frac{4\pi}{\lambda}\big(L(x_i, y_j, t)\big) - s(t) \right] \qquad (1)$$

Où $L(x_i, y_j, t)$ est la distance entre la source rayonnante 11, 12 à l'instant t et le point d'analyse ($x_i, y_j$) sur l'individu, λ représentant la longueur d'onde. Les distances $L(x_i, y_j, t)$ sont délivrées par la caméra 5. s(t) représente la distance entre le centre de l'antenne émettrice et la caméra.

Avantageusement, la caméra permet de réaliser autour de l'individu visé une enveloppe virtuelle dont on connaît les distances au dispositif selon l'invention. Cette enveloppe virtuelle correspond en fait à la surface extérieure des vêtements portés par l'individu. Elle permet d'obtenir une surface de référence. Les mesures effectuées par la caméra permettent en fait d'obtenir un réseau maillé représentant cette surface. La surface peut être obtenue par lissage en effectuant une moyenne. Cette surface est calculée à intervalles de temps réguliers, par exemple toutes les 20 ms, permettant de focaliser sur chaque partie de l'individu en mouvement (bras, torse, jambes ...).

La caméra qui peut être du type infrarouge, ayant une rétine constituée d'un réseau de capteurs CMOS mesure la distance par le niveau de puissance reçue. Pour un codage réalisé sur 12 bits par exemple, la précision de mesure peut-être de 1 millimètre à une distance d'un mètre.

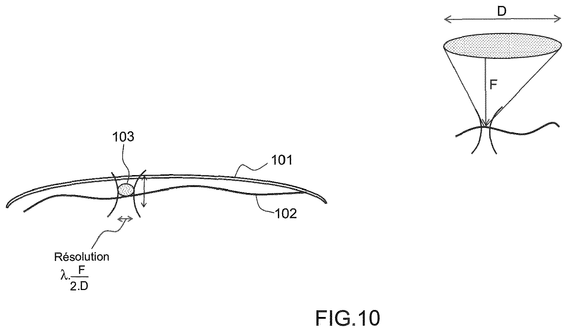

La figure 10 illustre la détection d'un objet 103 à travers un vêtement 101, l'objet étant fixé sur le corps 102 de l'individu en dessous du vêtement 101. La distance du vêtement, plus particulièrement de ses points, est mesurée et connue du dispositif selon l'invention, le vêtement ayant été représenté comme la surface virtuelle tel que décrit précédemment. L'obtention de cette enveloppe est très importante car elle permet de suivre les déformations du vêtement dues au corps en mouvement. En effet, la caméra 5 permet la mesure de distance selon des périodes de temps données, par exemple toutes les 20 ms, de toutes les parties du corps en mouvement, plus précisément de l'enveloppe vestimentaire. Ces mesures de distance permettent la formation d'un filtre adapté pour la formation des images.

Le processus de formation d'image s'effectue selon deux étapes : une étape d'acquisition et une étape de focalisation. Dans l'étape d'acquisition, le radar acquiert les composantes I et Q de l'équation (1) ci-dessus. Etant donné que les signaux radar traversent les vêtements, l'image acquise est celle du corps équipé éventuellement d'un objet 103. La détermination des coefficients de réflexions des signaux reçus permet de définir classiquement la nature des parties de l'image et notamment de l'objet 103.

Dans l'étape de focalisation, la caméra permet de définir les distances formant l'argument de l'exponentielle de l'intégrale dans l'équation (1) et donc de calculer l'image.

La résolution de l'image est égale à $\lambda.\dfrac{F}{2D}$ .

L'image obtenue est donnée par la relation (1). Pour chaque pixel x, y de l'image on procède au calcul :

$$\sum \ (I(t)+iQ(t)).\exp\left[-\mathrm{i}\frac{4\pi}{\lambda}\Big(L(x_i,y_j,t)\Big)-s(t)\right]$$

la partie $\exp\left[-\mathrm{i}\dfrac{4\pi}{\lambda}\Big(L(x_i,y_j,t)\Big)-s(t)\right]$ correspondant au filtre adapté. ($L(x_i,y_j,t)$) est calculée sur la surface virtuelle formée à partir de plusieurs points mesurés sur les vêtements, sur chaque partie du corps de l'individu en mouvement.

Le bruit causé par les imprécisions de mesures est classiquement filtré par des fenêtres glissantes sur l'image.

L'image finale est obtenue selon la relation (1) et est calculée par le calculateur 6 à partir de l'image fournie par le radar, par les composantes I et Q, et de l'image fournie par la caméra délivrant l'argument de l'exponentielle. Dans un mode de réalisation possible, le calculateur 6 peut être intégré dans le radar 2. En particulier la fonction du calculateur 6 peut être réalisée par les moyens de traitement du radar qui traitent les composantes I et Q de l'image SAR. Une fois l'image finale obtenue, la reconnaissance et la classification des objets peut être réalisée en analysant :

- Leurs formes ;
- Leurs permittivités diélectriques, révélant leurs natures.

Cette reconnaissance peut être réalisée par le calculateur 6 ou les moyens de traitement du radar.

Dans un mode de réalisation particulier, le radar 2 émet selon plusieurs fréquences, proches d'une fréquence donnée, par exemple 77 GHz. Le radar 2 émet par exemple selon cinq fréquences F1, F2, F3, F4, F5. Dans la phase mesure, l'impulsion est par exemple découpée en cinq parties, les parties étant émises successivement à F1, F2, F3, F4, F5. Si l'impulsion dure 200 $\mu$s, chaque partie dure alors 40 $\mu$s.

Plus généralement, le radar émet en continu (CW), l'impulsion d'émission étant découpée en N parties, chaque partie correspondant à une fréquence. On reste par la suite dans l'exemple où N est égal à 5.

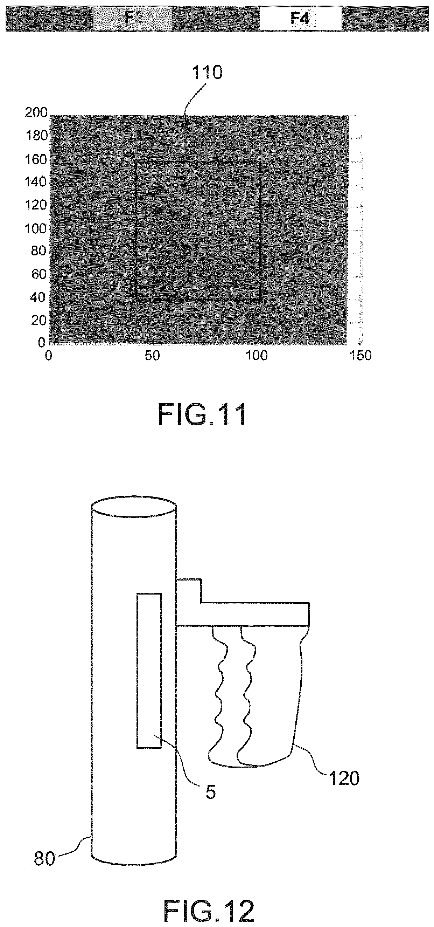

Dans la phase analyse, les phases et amplitudes sont par exemple calculées pour toutes les fréquences. Une première analyse à la première fréquence F1 est faite sur l'ensemble du corps. Puis une deuxième analyse est faite sur une zone limitée 110 contenant une forme détectée pour les quatre autres fréquences F2, F3, F4, F5, comme l'illustre la figure 11. Ces différentes analyses permettent de s'approcher de la valeur théorique de la permittivité diélectrique de l'objet et de son épaisseur.

A titre d'exemple, on peut atteindre des valeurs mesurées respectivement de 2,9 et 11 mm de la permittivité diélectrique et l'épaisseur pour des valeurs théoriques de 3,1 et 10 mm.

La figure 12 présente un exemple de réalisation d'un dispositif selon l'invention, portable. La partie antennaire constituée d'un ou deux scanners 1, 1', le radar 2 et leurs moyens d'interconnexion 3, 4, 83, 84 sont disposés à l'intérieur d'une structure cylindrique faisant également fonction de radôme 80. Cette structure supporte par ailleurs la caméra 5. La structure 80 est reliée à une poignée 120 permettant d'obtenir un dispositif portable, facilement maniable et léger. Son coût de réalisation peut être faible en raison du type de composants utilisés, en particulier le radar 2 peut être un radar de type automobile, économique, et la caméra peut-être de type Kinect, également économique. Les composants constituant le scanner intérieur (cylindres, guides d'onde, moteur et roulement à billes) sont également économiques.

On obtient ainsi un dispositif permettant la détection d'objets illicites en détectant les formes à travers les vêtements et en caractérisant leur matière. Il peut être utilisé en mouvement. La détection peut facilement se faire en pointant le dispositif à environ un mètre d'un individu à contrôler.

Le dispositif de détection est relié à des moyens de visualisation par une liaison sans fil adaptée. Les moyens de visualisation 7 peuvent être un écran disposé dans un centre de contrôle ou être à portée de l'utilisateur qui manipule le dispositif. Les moyens de visualisation peuvent également être des lunettes portées par l'utilisateur et sur lesquelles sont projetées les images détectées.

Il est possible de prévoir une deuxième caméra stéréoscopique pour améliorer le champ de vision.

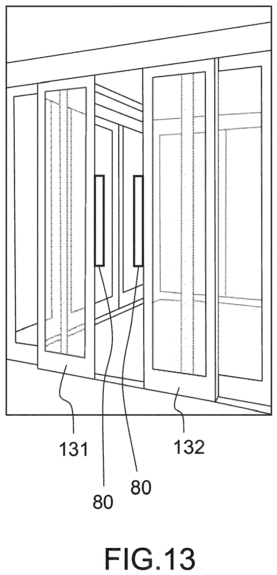

La figure 13 présente un autre exemple d'utilisation d'un dispositif selon l'invention avec un autre « packaging ». Le système de contrôle est ici appliqué au niveau de portes 131, 132 s'ouvrant automatiquement. Quatre dispositifs selon l'invention, dont deux sont représentés par leurs radômes 80, peuvent être utilisés. Pour chaque porte, un dispositif est placé vers l'extérieur et un dispositif est placé vers l'intérieur, chaque dispositif étant placé au plus près de l'ouverture. Comme dans l'exemple de la figure précédente, un individu ou un objet mobile peut être contrôlé sous tous les angles. Un écran de visualisation, commun aux quatre dispositifs, est placé à distance.

Les exemples de réalisations précédents montrent que l'invention améliore la fluidité des contrôles, en particulier dans les lieux de passages, tels que par exemple les aéroports, les gares ou les centres commerciaux ou autres lieux publics.

**Revendications**

1. Dispositif de détection d'objets portés par des individus, immobiles ou en mouvement, **caractérisé en ce qu'**il comporte au moins :

   - au moins une antenne rotative (1, 1') comportant au moins deux guides d'onde rectilignes parallèles (24, 25) et un cylindre (21) pourvu d'une fente hélicoïdale (22) mobile en rotation autour desdits guides, lesquels sont ouverts en regard de la face intérieure dudit cylindre mobile, ladite surface formant un court-circuit hyperfréquence pour fermer lesdits guides, un desdits guides (24) étant dédié à l'émission, une source rayonnante mobile (11, 12) étant en regard desdits guides par suite du mouvement de rotation dudit cylindre (21) induisant un faisceau d'émission et de réception mobile apte à être orienté vers un individu ;
   - un radar (2) émettant un signal hyperfréquence selon une onde continue (CW) vers le guide d'émission (24) de ladite antenne et recevant les signaux reçus des guides (24, 25) de ladite antenne captés par ledit faisceau mobile, lesdits signaux reçus étant la composante directe et la composante en quadrature ;
   - une caméra stéréoscopique (5) orientée dans la même direction que ledit faisceau mobile, apte à enregistrer l'enveloppe vestimentaire dudit individu, ladite enveloppe servant de surface de référence pour la mesure des distances audit dispositif ;
   - un calculateur (6) calculant une image de type SAR de la partie du corps dudit individu qui est ciblée par ledit radar et ladite caméra et qui est équipée d'éventuels objets (103), à partir des signaux reçus dudit radar (2) et des distances mesurées par ladite caméra (5).

2. Dispositif selon la revendication 1, **caractérisé en ce que** les deux guides (24, 25) étant gravés dans un cylindre (26) disposé à l'intérieur du cylindre mobile (21), les deux cylindres ayant le même axe (100), l'espace entre les deux cylindres est égal à 0,1 mm $\pm$ 0,05 mm.

3. Dispositif selon l'une quelconque des revendications précédentes, **caractérisé en ce que** ladite antenne rotative (1, 1') comporte un système de minimisation des fuites hyperfréquence, ledit système étant composé de trois cavités (52, 53, 53'), lesdites cavités étant disposées deux à deux de chaque côté desdits guides d'onde (24, 25), parallèlement à ceux-ci, sur toute leur longueur.

**4.** Dispositif selon l'une quelconque des revendications précédentes, **caractérisé en ce que** lesdits guides d'onde (24, 25) étant gravés dans un cylindre (26) disposé à l'intérieur du cylindre mobile (21), ledit cylindre mobile (21) et ledit cylindre intérieur (26) sont mobiles en rotation par l'intermédiaire d'un dispositif à roulement à billes (30), la base dudit cylindre mobile (21) et la base dudit cylindre intérieur (26) étant respectivement solidaire mécaniquement de la partie mobile (27') et de la partie fixe (27) dudit dispositif (30).

**5.** Dispositif selon l'une quelconque des revendications précédentes, **caractérisé en ce que** ledit radar (2) fonctionne dans une bande de fréquence millimétrique.

**6.** Dispositif selon l'une quelconque des revendications précédentes, **caractérisé en ce qu'**il comporte deux antennes rotatives (1, 1') pour que ledit radar fonctionne en mode bi-statique, une antenne (1) réalisant l'émission et l'autre antenne (1') étant dédiée à la réception.

**7.** Dispositif selon la revendication 6, **caractérisé en ce que** les antennes (1, 1') sont reliées entre elles par deux guides d'onde (83, 84), un guide (83) reliant les guides d'émission (24) desdites antennes et l'autre guide (84) reliant les guides de réception (25), le premier guide d'onde (83) étant relié via un T magique à un guide d'onde (3) relié au radar et le deuxième guide d'onde (84) étant relié via un autre T magique à un guide d'onde (4) relié au radar.

**8.** Dispositif selon l'une quelconque des revendications précédentes, **caractérisé en ce que** ledit radar (2) émet selon un nombre N de fréquences proches d'une fréquence donnée, l'impulsion d'émission étant découpée en N parties, chaque partie correspondant à une fréquence, un premier niveau d'analyse de l'image étant réalisé pour les signaux reçus à la première desdites fréquences (F1), d'autres analyses étant réalisées pour les signaux reçus aux autres fréquences (F2, F3, F4, F5), les différentes analyses permettant d'approcher la valeur théorique de la permittivité diélectrique d'un objet détecté.

**9.** Dispositif selon l'une quelconque des revendications précédentes, **caractérisé en ce que** le calculateur (6) est partie intégrante des moyens de traitement dudit radar (2).

**10.** Dispositif selon l'une quelconque des revendications précédentes, **caractérisé en ce qu'**il comporte des moyens de visualisation (7) des images obtenues, lesdits moyens de visualisation étant des lunettes portées par un utilisateur et sur lesquelles sont projetées lesdites images.

**11.** Dispositif selon l'une quelconque des revendications précédentes, **caractérisé en ce que** la partie antennaire (1, 1'), le radar (2) et leurs moyens d'interconnexion (3, 4, 83, 84) sont disposés à l'intérieur d'une structure cylindrique (80) portable, faisant également fonction de radôme, ladite structure supportant ladite caméra (5).

**Patentansprüche**

**1.** Erkennungsvorrichtung von durch Personen im Stillstand oder in Bewegung getragenen Objekten, **dadurch gekennzeichnet, dass** sie mindestens Folgendes beinhaltet:

- mindestens eine drehbare Antenne (1, 1'), welche mindestens zwei geradlinige, parallele Hohlwellenleiter (24, 25) und einen Zylinder (21) mit einem spiralförmigen Schlitz (22) beinhaltet, welcher drehbar um die Hohlwellenleiter beweglich ist, welche gegenüber der inneren Seite des beweglichen Zylinders offen sind, wobei die Fläche einen Mikrowellen-Kurzschluss zum Schließen der Leiter bildet, wobei einer der Leiter (24) zum Senden bestimmt ist, wobei eine bewegliche strahlende Quelle (11, 12) aufgrund der Drehbewegung des Zylinders (21) den Leitern zugewandt ist, wodurch sie einen beweglichen Sende- und Empfangsstrahl induziert, welcher in der Lage ist, auf eine Person gerichtet zu werden;
- einen Radar (2), welcher ein Mikrowellensignal mit einer kontinuierlichen Welle (CW) an den Sende-Leiter (24) der Antenne aussendet und die von den Leitern (24, 25) empfangenen Signale der Antenne empfängt, welche durch den beweglichen Strahl erfasst werden, wobei die empfangenen Signale die direkte Komponente und die Quadraturkomponente sind;
- eine stereoskopische Kamera (5), welche in dieselbe Richtung ausgerichtet ist wie der bewegliche Strahl und in der Lage ist, die Bekleidungshülle der Person aufzuzeichnen, wobei die Hülle als Referenzfläche zur Messung der Abstände zur Vorrichtung dient;
- einen Rechner (6), welcher ein Bild vom Typ SAR desjenigen Körperteils der Person berechnet, welcher von dem Radar und der Kamera angepeilt wird, und welcher mit eventuellen Objekten (103) ausgerüstet ist, anhand der vom Radar (2) empfangenen Signale und der von der Kamera (5) gemessenen Abstände.

2. Vorrichtung nach Anspruch 1, **dadurch gekennzeichnet, dass**, da die beiden Leiter (24, 25) in einen Zylinder (26) graviert sind, welcher innerhalb des beweglichen Zylinders (21) angeordnet ist, wobei die beiden Zylinder dieselbe Achse (100) besitzen, der Raum zwischen den beiden Zylindern 0,1 mm ± 0,05 mm beträgt.

3. Vorrichtung nach einem der vorhergehenden Ansprüche, **dadurch gekennzeichnet, dass** die drehbare Antenne (1, 1') ein System zur Minimierung der Mikrowellenlecks beinhaltet, wobei das System aus drei Hohlräumen (52, 53, 53') gebildet wird, wobei die Hohlräume jeweils in Zweiergruppen beidseits der Hohlwellenleiter (24, 25), parallel zu diesen, über deren gesamte Länge angeordnet sind.

4. Vorrichtung nach einem der vorhergehenden Ansprüche, **dadurch gekennzeichnet, dass**, da die Hohlwellenleiter (24, 25) in einen Zylinder (26) graviert sind, welcher innerhalb des beweglichen Zylinders (21) angeordnet ist, der bewegliche Zylinder (21) und der innere Zylinder (26) durch Vermittlung eines Kugellagersystems (30) drehbar beweglich sind, wobei die Basis des beweglichen Zylinders (21) und die Basis des inneren Zylinders (26) jeweils mechanisch fest mit dem beweglichen Teil (27') und dem festen Teil (27) der Vorrichtung (30) verbunden sind.

5. Vorrichtung nach einem der vorhergehenden Ansprüche, **dadurch gekennzeichnet, dass** der Radar (2) in einem millimetrischen Frequenzband arbeitet.

6. Vorrichtung nach einem der vorhergehenden Ansprüche, **dadurch gekennzeichnet, dass** es zwei drehbare Antennen (1, 1') beinhaltet, damit der Radar im bi-statischen Modus arbeitet, wobei eine Antenne (1) die Sendung bewerkstelligt und die andere Antenne (1') zum Empfang dient.

7. Vorrichtung nach Anspruch 6, **dadurch gekennzeichnet, dass** die Antennen (1, 1') miteinander durch zwei Hohlwellenleiter (83, 84) verbunden sind, wobei ein Leiter (83) die Sendeleiter (24) der Antennen miteinander verbindet und der andere Leiter (84) die Empfangsleiter (25) miteinander verbindet, wobei der erste Hohlwellenleiter (83) über ein magisches T mit einem Hohlwellenleiter (3) verbunden ist, welcher mit dem Radar verbunden ist und der zweite Hohlwellenleiter (84) über ein anderes magisches T mit einem mit dem Radar verbundenen Hohlwellenleiter (4) verbunden ist.

8. Vorrichtung nach einem der vorhergehenden Ansprüche, **dadurch gekennzeichnet, dass** der Radar (2) entsprechend einer Anzahl N von Frequenzen sendet, welche nahe einer gegebenen Frequenz liegen, wobei der Sendeimpuls in N Teile geschnitten wird, wobei jeder Teil einer Frequenz entspricht, wobei ein erstes Analyse-Niveau des Bildes für die in der ersten der Frequenzen (F1) empfangenen Signale bewerkstelligt wird, wobei weitere Analysen für die in den anderen Frequenzen (F2, F3, F4, F5) empfangenen Signalen bewerkstelligt werden, wobei die unterschiedlichen Analysen es ermöglichen, sich dem theoretischen Wert der dielektrischen Permittivität eines erkannten Objekts anzunähern.

9. Vorrichtung nach einem der vorhergehenden Ansprüche, **dadurch gekennzeichnet, dass** der Rechner (6) integrierender Bestandteil der Bearbeitungsmittel des Radars (2) ist.

10. Vorrichtung nach einem der vorhergehenden Ansprüche, **dadurch gekennzeichnet, dass** sie Mittel zur Visualisierung (7) der gewonnenen Bilder beinhaltet, wobei als Visualisierungsmittel eine vom Benutzer getragene Brille dient und auf welche die Bilder projiziert werden.

11. Vorrichtung nach einem der vorhergehenden Ansprüche, **dadurch gekennzeichnet, dass** der Antennenabschnitt (1, 1'), der Radar (2) und deren Vernetzungsmittel (3, 4, 83, 84) innerhalb einer tragbaren zylindrischen Struktur (80) angeordnet sind, welche ebenfalls als Radarkuppel fungiert, wobei diese Struktur die Kamera (5) trägt.

**Claims**

1. Device for detecting objects borne by immobile or moving individuals, **characterized in that** it includes at least:

- at least one rotary antenna (1, 1') including at least two parallel rectilinear waveguides (24, 25) and a cylinder (21) provided with a helicoidal slot (22) rotatably movable about said guides, which guides are open facing the interior face of said movable cylinder, said surface forming a microwave short-circuit in order to close said guides, one of said guides (24) being dedicated to emission, a movable radiating source (11, 12) being located facing said guides subsequent to the rotational movement of said cylinder (21) inducing a movable emission and reception beam able to be oriented towards an individual;

- one radar (2) emitting a continuous wave (CW) microwave signal towards the emission guide (24) of said antenna and receiving the signals received from the guides (24, 25) of said antenna, which signals are captured by said movable beam, said received signals being the direct component I and the quadrature component;

- one stereoscopic video camera (5) that is oriented in the same direction as said movable beam and able to record the clothing envelope of said individual, said envelope serving as a reference surface for the measurement of distances to said device;

- one processor (6) that computes an SAR image of that portion of the body of said individual which is targeted by said radar and said video camera and who is possibly equipped with one or more objects (103), from signals received from said radar (2) and the distances measured by said video camera (5).

2. Device according to Claim 1, **characterized in that** the two guides (24, 25) being etched into a cylinder (26) placed in the interior of the movable cylinder (21), the two cylinders having the same axis (100), the space between the two cylinders is equal to 0.1 mm $\pm$ 0.05 mm.

3. Device according to either one of the preceding claims, **characterized in that** said rotary antenna (1, 1') includes a system for minimizing microwave leaks, said system being composed of three cavities (52, 53, 53'), said cavities being arranged pairwise on each side of said waveguides (24, 25), parallelly thereto, over all their length.

4. Device according to any one of the preceding claims, **characterized in that** said waveguides (24, 25) being etched into a cylinder (26) placed in the interior of the movable cylinder (21), said movable cylinder (21) and said interior cylinder (26) are rotatably movable by way of a ball bearing device (30), the base of said movable cylinder (21) and the base of said interior cylinder (26) being mechanically secured to the movable portion (27') and the stationary portion (27) of said device (30), respectively.

5. Device according to any one of the preceding claims, **characterized in that** said radar (2) operates in a millimetre-wave frequency band.

6. Device according to any one of the preceding claims, **characterized in that** it includes two rotary antennae (1, 1') so that said radar may operate in a bi-static mode, one antenna (1) realising the emission and the other antenna (1') being dedicated to the reception.

7. Device according to Claim 6, **characterized in that** the antennae (1, 1') are connected together by two waveguides (83, 84), one guide (83) connecting the emission guides (24) of said antennae and the other guide (84) connecting the reception guides (25), the first waveguide (83) being connected via a magic T to a waveguide (3) that is connected to the radar and the second waveguide (84) being connected via another magic T to a waveguide (4) that is connected to the radar.

8. Device according to any one of the preceding claims, **characterized in that** said radar (2) emits at a number N of frequencies close to a given frequency, the emission pulse being divided into N portions, each portion corresponding to one frequency, a first level of analysis of the image being performed for the signals received at the first of said frequencies (F1), other analyses being performed for the signals received at the other frequencies (F2, F3, F4, F5), the various analyses allowing the theoretical value of the dielectric permittivity of a detected object to be approached.

9. Device according to any one of the preceding claims, **characterized in that** the processor (6) is an integral part of the processing means of said radar (2).

10. Device according to any one of the preceding claims, **characterized in that** it includes means (7) for viewing the obtained images, said viewing means being glasses worn by a user and onto which said images are projected.

11. Device according to any one of the preceding claims, **characterized in that** the antennal portion (1, 1'), the radar (2) and their interconnecting means (3, 4, 83, 84) are placed in the interior of a portable cylindrical structure (80) that also plays the role of a radome, said structure supporting said video camera (5).

FIG.1

FIG.2a

FIG.2b

FIG.3

FIG.4a

FIG.4b

FIG.4c

FIG.4d

FIG.4e

FIG.5a

FIG.5b

FIG.6a

FIG.6b

70

e = 0,1mm ± 0,05 mm

Coupe C-C

e = 0,1mm ± 0,05 mm

70

C

22

C

22

FIG.7

**FIG.8a**

**FIG.8b**

MONOSTATIQUE

BISTATIQUE

91

1

5

2

1'

FIG.9

EP 3 211 452 B1

D

F

103

101

102

Résolution

$\lambda.\dfrac{F}{2.D}$

FIG.10

21

FIG.11

FIG.12

FIG.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3003959 A1
- FR 2844642 A1
- WO 2015059132 A2

**Littérature non-brevet citée dans la description**

- **J.DARRICAU.** Physique et Théorie du Radar -Tome 3. 1994, 483